**Europäisches Patentamt**

**European Patent Office**

**Office européen des brevets**

(19)

(11) Veröffentlichungsnummer: **0 219 554 B1**

# EUROPÄISCHE PATENTSCHRIFT

(12)

(45) Veröffentlichungstag der Patentschrift:
03.05.89

(51) Int. Cl.⁴: **B 01 D 46/02**

(21) Anmeldenummer: 85111095.7

(22) Anmeldetag: 03.09.85

(54) Staubfilter.

(30) Priorität: 02.08.85 DE 3527768

(43) Veröffentlichungstag der Anmeldung:
29.04.87 Patentblatt 87/18

(45) Bekanntmachung des Hinweises auf die Patenterteilung:
03.05.89 Patentblatt 89/18

(84) Benannte Vertragsstaaten:
AT BE CH DE FR GB IT LI NL SE

(56) Entgegenhaltungen:
DE-C- 562 679
DE-U- 1 764 889
GB-A- 767 220

(73) Patentinhaber: Intensiv-Filter GmbH & Co KG,
Vosskuhlstrasse 63, D-5620 Velbert 11 (DE)

(72) Erfinder: Kordas, Friedel, Landschützstrasse 20b,
D-4350 Recklinghausen-Süd (DE)

(74) Vertreter: Geiersbach, Walter, Dipl.-Ing., Wickrather
Strasse 43, D-4000 Düsseldorf 11 (DE)

## Beschreibung

Die Erfindung betrifft ein Staubfilter mit senkrecht oder waagerecht angeordneten, über Stützelemente gezogenen und an einer zwischen Staubluft- und Reinluftraum in einem Filtergehäuse angeordneten Trennplatte befestigten Filterschläuchen, die von der Reinluftseite her ein- und ausbaubar sind und deren Stützelemente ohne irgendwelche Befestigungsvorrichtungen in den Filterschläuchen angeordnet sind.

Bei Staubfiltern werden die Filterschläuche üblicherweise ohne zusätzliche Halteeinrichtungen an der Trennplatte befestigt. Sind die Filterschläuche waagerecht angeordnet oder liegen sie bei großen Längen aufgrund von Fertigungstoleranzen im unteren Bereich aneinander, kann sich Staub ansammeln. Geraten sie durch die Geschwindigkeit der Staubluft in Schwingung, schlagen sie aneinander und verschleißen. In diesen Fällen sind zusätzliche Halteeinrichtungen für die Filterschläuche erforderlich.

Staub sammelt sich also in Staubfiltern an, wenn die Filterschläuche aneinanderliegen. Der Staub kann dann nicht, wie an sich vorgesehen, durch die zwischen den Filterschläuchen vorhandenen Freiräume fallen. Er baut sich statt dessen auf zwischen den aneinanderliegenden Filterschläuchen. Größere Staubansammlungen in Staubfiltern verursachen in einfachen Fällen schon Betriebsstörungen. Werden brennbare Stäube gefiltert, können Staubansammlungen Filterbrände und gefährliche Staubexplosionen bewirken.

Aus Gründen des technischen Aufwandes und des Bedarfs an Platz werden Staubfilter kompakt gebaut und mit großen Luftgeschwindigkeiten im Bereich der Filterschläuche im Staubluftraum betrieben. Dadurch schlagen die Filterschläuche aneinander. An den Aufschlagstellen werden sie beschädigt; es entstehen Löcher. Durch sie kann Staub ungehindert von der Staubluftseite her zur Reinluftseite gelangen. Das ist aus Gründen des Umweltschutzes nicht zulässig.

Es sind Halteeinrichtungen für Filterschläuche bekannt, bei denen die Filterschläuche waagerecht angeordnet sind und mit ihrem Ende aufliegen (DE-OS 3 006 823 und DE-OS 3 009 596). Dadurch werden die Filterschläuche, wie erforderlich, ordnungsgemäß auf Distanz gehalten, so daß ein Aneinanderlegen oder -schlagen der Filterschläuche sicher verhindert wird.

Diese Halterungen haben jedoch den Nachteil, daß die Filterschläuche im Bereich der Auflage durch die unvermeidliche Bewegung des Filterschlauchmaterials beim Umschalten von der Filtrier- zur Spülphase großen Reibungskräften unterliegen. Dadurch verschleißen sie. Die Filterschläuche werden nämlich in der Filtrierphase durch den Differenzdruck fest auf das Stützelement gepreßt und wölben sich nach innen durch. Während der Spülphase werden sie dagegen durch das Hineinblasen von Spülluft nach außen aufgebläht.

Es sind auch Halteeinrichtungen bekannt, die aus einer Haltestange mit Führungen bestehen (DE-GM 77 12 533). Die Haltestange ist durch eine Öffnung im Filterschlauchboden mit dem im Inneren des Filterschlauches angeordneten Stützelement fest verbunden. Auch diese Halteeinrichtung ist in der Lage, die Filterschläuche ordnungsgemäß auf Distanz zu halten. Die feste Verbindung des Filterschlauches mit dem Stützelement behindert den Filterschlauch jedoch in seiner Bewegungsfreiheit während des Umschaltens von der Filtrier- in die Spülphase. Auch hier wird der Filterschlauch durch die heftige Bewegung an der Einspannstelle starken Belastungen unterworfen, die mit der Zeit das Filtermaterial verschleißen lassen.

Alle bekannten Halteeinrichtungen mit durch den Filterschlauch hindurchgesteckten Halterungen haben weiterhin den Nachteil, daß die Stützelemente zuerst in den Filterschlauch eingeführt und eingespannt werden müssen, bevor sie in die Trennplatte eingelassen werden können. Das ist bei langen Filterschläuchen mit geteilten Stützelementen nicht durchführbar. Die Filterschläuche müssen auch während des Betriebs einer Filteranlage mehrmals ausgewechselt werden, weil sie sich entweder mit Staub zusetzen, der durch den normalen Spülvorgang nicht mehr entfernt werden kann, oder durch Temperatur oder chemischen Angriff ausfallen. Dabei müssen die Filterschläuche von der Reinluftseite her ein- und ausgebaut werden, weil die Handhabung von der Staubluftseite aus unzumutbare Staubbelästigungen für das Wartungspersonal zur Folge hätte. Bei gesundheitsschädlichen Stäuben müßten aufwendige und den Arbeitsablauf behindernde Schutzmaßnahmen getroffen werden. Deshalb dürfen bei fortschrittlichen Filteranlagen die Filterschläuche nicht mit dem Stützelement verbunden werden.

Die Filterschläuche werden so gewechselt, daß die Stützelemente von der Reingasseite her aus den Filterschläuchen herausgezogen werden. Die Filterschläuche werden dann in den Staubluftraum des Filters gestoßen, wo sie durch Türen unter geringstmöglicher Staubbelästigung für das Bedienungspersonal in bereitstehende Container gebracht werden. Bei Halteeinrichtungen, die durch die Filterschläuche hindurchgesteckt werden, ist diese Handhabungsweise nicht anwendbar, weil jeder Filterschlauch im Bereich der Halteeinrichtung von dem Stützelement gelöst werden muß. Es ist auch nicht möglich, den Filterschlauch samt Stützelement zu erneuern. Eine Wiederverwendung des Stützelementes ist nämlich aus Kostengründen zwingend geboten.

Schließlich haben bekannte Halteeinrichtungen infolge der aus Festigkeitsgründen erforderlichen Dimensionierung große Flächen, auf denen sich Staub ablagern kann. Größere Ablagerungen von Staub im Filter sind aber aus den schon geschilderten Gründen unbedingt zu vermeiden.

Der Erfindung liegt die Aufgabe zugrunde, ein Staubfilter der eingangs genannten Art zu schaffen, bei dem sich die Filterschläuche frei bewegen können, dadurch im Bereich der Halteeinrichtung nicht verschleißen, sich von der Reingasseite her ein- und ausbauen lassen und deren Teile so dimensioniert sind, daß sich größere Mengen an Staub nicht ansammeln können.

Diese Aufgabe wird gemäß der Erfindung dadurch gelöst, daß die Filterschläuche mit einem als Verlängerung über ihren Boden hinaus ragenden Stutzen in ein aus Ringen bestehendes und am Filtergehäuse befestigtes Haltenetz in axialer Richtung der Filterschläuche frei beweglich und in radialer Richtung durch die Größe der Ringe im Haltenetz begrenzt beweglich hineingesteckt sind.

Der mit der Erfindung erzielbare technische Fortschritt beruht auf folgenden vorteilhaften Wirkungen. Die Filterschläuche können mit dem Stutzen in die Ringe des Haltenetzes von der Reinluftseite her eingeführt werden, ohne daß der Staubraum betreten werden muß. Die Filterschläuche können sich in axialer Richtung ungehindert bewegen. Defekte Filterschläuche, die in den Staubluftraum des Filters gestoßen werden, fallen auf das Haltenetz und können in gewohnter Weise geborgen werden. Lediglich die Bedienungstüre im Filtergehäuse ist oberhalb des Haltenetzes anzuordnen, weil die in den Staubluftraum gestoßenen Filterschläuche von dem Haltenetz aufgefangen werden und von hier aus durch die Bedienungstüre aus dem Filtergehäuse herausgeholt werden müssen. Da für das Haltenetz sehr dünne Ringe und Stege genügen, ist die Ablagerung von Staub auf diesen Teilen vernachlässigbar gering.

Weitere wesentliche Merkmale der Erfindung sind im folgenden aufgeführt. Ein die Erfindung charakterisierendes Merkmal ist der Anschluß des Stutzens an den Filterschlauch. Hierbei behält der Filterschlauch bis zu seinem Boden die übliche Form. Zur Aufnahme des Stutzens ist lediglich ein zusätzlicher Ring erforderlich. Dieser Ring ist in sich geschlossen und aus Draht mit einem kreisförmigen Querschnitt hergestellt. Der Draht kann aus Metall, Kunststoff oder einem anderen Material bestehen. Der Ring ist am unteren Ende des Filterschlauches in den Filterschlauch eingelassen. Zweckmäßig ist der Ring in eine durch Einschlagen des unteren Endes des Filterschlauches nach innen und in axialer Richtung zum offenen Ende hin entstehende Falte eingelegt.

Um den Durchmesser des Stutzens zum Ein- und Ausbauen variieren zu können, besteht der Stutzen aus einem an einer seiner Mantellinien geschlitzten Rohr, dessen Enden sich gegenseitig überlappen. Vorteilhaft läuft der Stutzen an seinem unteren Ende glatt aus und ist an seinem oberen Ende mit einer umlaufenden, nach innen durchgewölbten Rille versehen. Dabei besteht der Stutzen aus elastischem und gleitfähigem Material.

Damit der Stutzen mit der umlaufenden Rille in den im Filterschlauch vorhandenen Ring eingeführt werden kann, ist der Stutzen durch Zusammendrücken von Hand, mit einer Bandzange oder einem anderen Werkzeug im Durchmesser verkleinerbar.

Gegen Herausfallen aus dem Filterschlauch ist der als offenes Rohr ausgebildete Stutzen im Bereich der Überlappung seiner beiden Enden durch Sicherungselemente, wie z.B. Stifte, Schrauben oder Nieten, gesichert.

Damit das Haltenetz auf einfache Art herstellbar ist, besteht es aus mit Klammern oder festen Stegen zusammengesetzten Ringen.

Vorteilhaft haben die Ringe einen kreisförmigen Querschnitt.

Um eine stabile Lage zu erhalten, ist das Haltenetz im Filtergehäuse durch in radialer Richtung wirkende Spannschrauben eingespannt.

Die Erfindung ist in der Zeichnung an mehreren Ausführungsbeispielen veranschaulicht. Es zeigt:

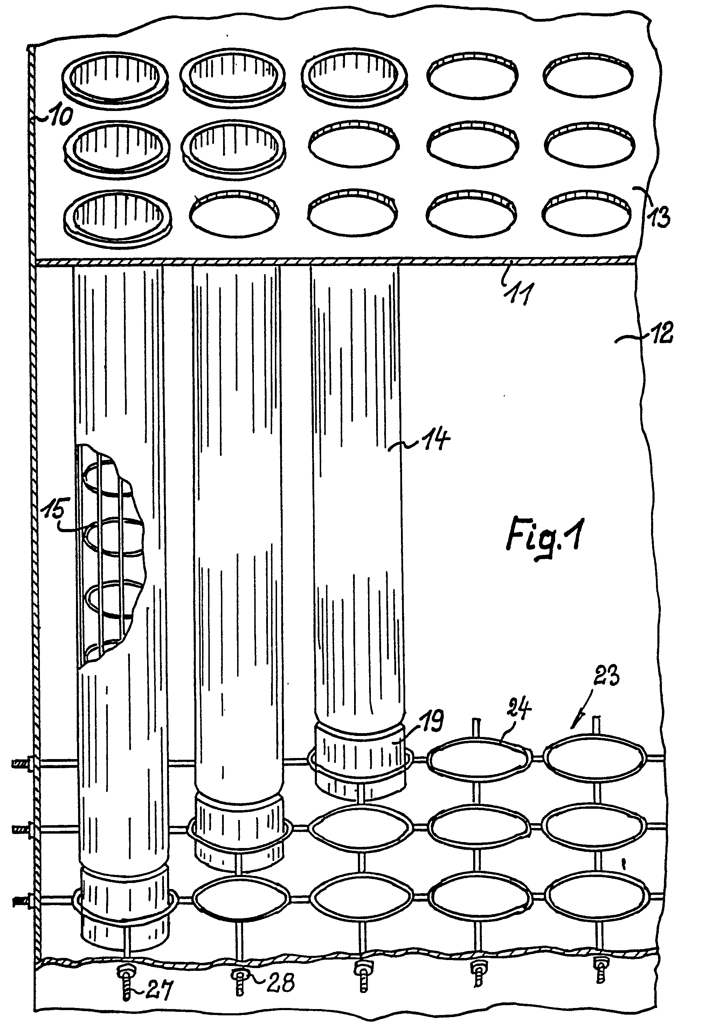

Fig. 1 einen Ausschnitt aus einem Staubfilter mit einigen eingebauten Filterschläuchen,

Fig. 2 den unteren Teil eines Filterschlauches und einen Teil des Haltenetzes, aufgebrochen in schaubildlicher Ansicht,

Fig. 3 einen Ausschnitt des Haltenetzes in schaubildlicher Ansicht und

Fig. 4 einen Ausschnitt einer anderen Ausführungsform des Haltenetzes in schaubildlicher Ansicht.

Ein Filtergehäuse 10 ist durch eine Trennplatte 11 in einen Staubluftraum 12 und einen Reinluftraum 13 unterteilt. An der Trennplatte 11 sind Filterschläuche 14 befestigt, die auf Stützkörbe 15 gezogen sind.

Bei der Anbringung des Filterschlauchbodens an den rohrförmig ausgebildeten Filterschlauch hat sich eine wenig aufwendige und in der Konfektionierung einfache Art durchgesetzt. Für den Filterboden wird eine Scheibe aus dem gleichen oder einem dickeren Filtermaterial wie der Filterschlauch verwendet. Diese Scheibe ist im Außendurchmesser etwas größer als der Durchmesser des Filterschlauches. Der scheibenförmige Filterboden wird an das Ende des Filterschlauches so angesetzt, daß aufgrund des etwas größeren Durchmessers des Filterbodens eine Überlappung zwischen dem Filterboden und dem Mantel des Filterschlauches entsteht. Auf dieser können die zur Befestigung erforderlichen Nähte plaziert werden. Diese bekannte Art der Filterschlauchkonfektionierung kann bei der Halteeinrichtung gemäß der Erfindung unverändert beibehalten werden.

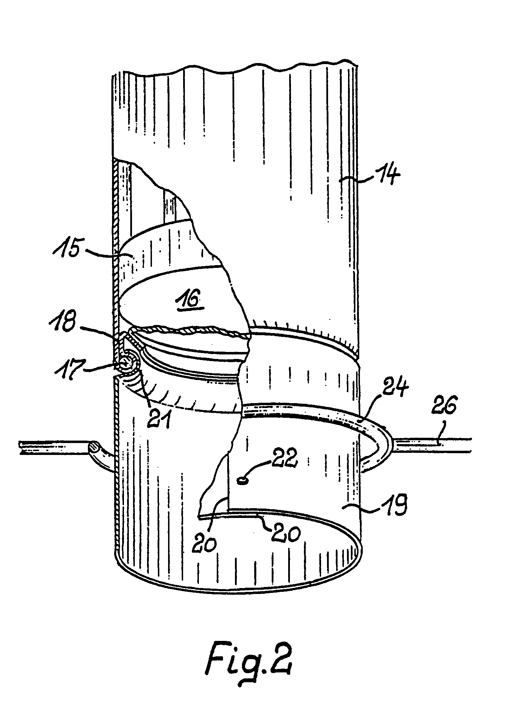

Wie Fig. 2 zeigt, ist am unteren Ende des Filterschlauches 14 ein Ring 17 eingelassen. Dazu wird der etwas länger gehaltene Filterschlauch 14 an seinem unteren Ende soweit nach innen eingeschlagen, daß in der dadurch entstehenden Falte 18 der Ring 17 mit einem gegenüber der bekannten Ausführung geringen Mehraufwand eingenäht werden kann. Der Filterboden 16 ist an dem rohrförmigen Mantel des Filterschlauches 14 befestigt.

Ein Stutzen 19 besteht aus einem an einer seiner Mantellinien geschlitzen Rohr, dessen Enden 20 sich gegenseitig überlappen. Die Länge der Überlappung beträgt etwa 20 mm. Der Stutzen 19 läuft an seinem unteren Ende glatt aus. An seinem oberen Ende ist er mit einer umlaufenden, nach innen durchgewölbten Rille 21 versehen. Durch Zusammendrücken von Hand, mit einer Bandzange oder einem anderen Werkzeug wird der Stutzen 19 in seinem Durchmesser so sehr verkleinert, daß er mit seiner umlaufenden Rille 21 auf den in den Filterschlauch 14 eingebetteten Ring 17 einrastet. Nach Loslassen bzw. Entfernen des Montagewerkzeuges springt der Stutzen 19 aufgrund seiner elastischen Eigenschaft in seine Ausgangslage zurück und legt sich dadurch an den Ring 17 fest an. Um den Einbau zu erleichtern, ist die gegenseitige Überlappung der beiden Enden 20 des Stutzens 19 so gewählt, daß den beiden Enden 20 vor dem Zusammendrücken eine definierte Lage gegeben ist.

In den meisten Fällen ist diese einfache Art der Befestigung völlig ausreichend, um die an dem Stutzen 19 angreifenden Haltekräfte übertragen zu können.

In Fällen, in denen eine gesicherte Befestigung erforderlich ist, kann der Stutzen 19 an seinen sich überlappenden Enden 20 durch das Anbringen von Sicherungselementen, wie z.B. Stife 22, Schrauben oder Nieten, daran gehindert werden, aus der Halterung herauszuspringen.

Der Außendurchmesser des Stutzens 19 ist erfindungsgemäß so gehalten, daß er ohne Widerstand durch die Öffnung in der Trennplatte 11 der Filterschläuche 14 hindurchgesteckt werden kann. Er ist also nicht größer als der Durchmesser des Filterschlauches, er kann aber auch kleiner gehalten werden.

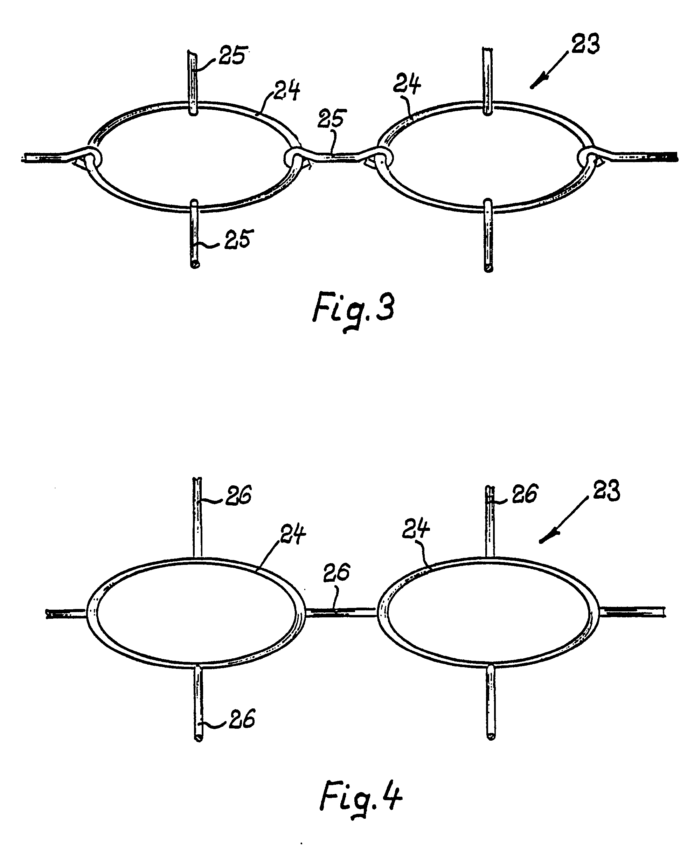

Jeder Filterschlauch 14 ist mit seinem Stutzen 19 in je einen Ring 24 eines Haltenetzes 23 eingeführt. Das Haltenetz 23 ist aus den Ringen 24 und Klammern 25 (Fig. 3) oder festen Stegen 26 (Fig. 4) in Längs- und Querrichtung zusammengesetzt. Die Herstellung eines solchen Haltenetzes 23 in der erfindungsgemäßen Art ist denkbar einfach. Es werden runde, in sich geschlossene Ringe 24 mit Klammern 25 oder festen Stegen 26 derart verbunden, daß die Mittenabstände der Ringe 24 gleich sind den Mittenabständen der Schläuche 14. Die Ringe 24 sind gewöhnlich aus Draht mit kreisförmigem Querschnitt geformt. Sie bestehen aus Stahl oder einem andern Material.

Es ist auch möglich, durch Veränderung der Mittenabstände bei den Ringen 24 des Haltenetzes 23 größere Sicherheitsabstände zu schaffen, z.B. im Bereich von Stützen oder Streben im Filtergehäuse 10. Dadurch wird in diesem Bereich ein Staubaufbau verhindert. Das ist ein weiterer Vorteil der erfindungsgemäßen Halteeinrichtung.

Jeweils am äußeren Rand des Haltenetzes 23 befinden sich Spannschrauben 27 und Spannmuttern 28, mit denen das Haltenetz 23 in Längs- und Querrichtung soweit gespannt wird, bis es eine stabile Lage einnimmt.

## Patentansprüche

1. Staubfilter mit senkrecht oder waagerecht angeordneten, über Stützelemente (15) gezogenen und an einer zwischen Staubluft- und Reinluftraum (12, 13) in einem Filtergehäuse (10) angeordneten Trennplatte (11) befestigten Filterschläuchen (14), die von der Reinluftseite her ein- und ausbaubar sind und deren Stützelemente (15) ohne irgendwelche Befestigungsvorrichtungen in den Filterschläuchen (14) angeordnet sind, dadurch gekennzeichnet, daß die Filterschläuche (14) mit einem als Verlängerung über ihren Boden (16) hinausragenden Stutzen (19) in ein aus Ringen (24) bestehendes und am Filtergehäuse (10) befestigtes Haltenetz (23) in axialer Richtung der Filterschläuche (14) frei beweglich und in radialer Richtung durch die Größe der Ringe (24) im Haltenetz (23) begrenzt beweglich hineingesteckt sind.

2. Staubfilter nach Anspruch 1, dadurch gekennzeichnet, daß zur Aufnahme des Stutzens (19) am unteren Ende des Filterschlauches (14) ein in sich geschlossener Ring (17) eingelassen ist, der aus einem im Querschnitt kreisförmigen Draht besteht.

3. Staubfilter nach Anspruch 2, dadurch gekennzeichnet, daß der Ring (17) in eine durch Einschlagen des unteren Endes des Filterschlauches (14) nach innen und in axialer Richtung zum offenen Ende hin entstehende Falte (18) eingelegt ist.

4. Staubfilter nach den Ansprüchen 1 bis 3, dadurch gekennzeichnet, daß der Stutzen (19) aus einem an einer seiner Mantellinien geschlitzen Rohr besteht, dessen Enden (20) sich gegenseitig überlappen.

5. Staubfilter nach einem der Ansprüche 1 bis 4, dadurch gekennzeichnet, daß der Stutzen (19) an seinem unteren Ende glatt ausläuft und an seinem oberen Ende mit einer umlaufenden, nach innen durchgewölbten Rille (21) versehen ist.

6. Staubfilter nach einem der Ansprüche 4 und 5, dadurch gekennzeichnet, daß der Stutzen (19) aus elastischem und gleitfähigem Material besteht.

7. Staubfilter nach den Ansprüchen 5 und 6, dadurch gekennzeichnet, daß der Stutzen (19) durch Zusammendrücken von Hand, mit einer Bandzange oder einem anderen Werkzeug im Durchmesser soweit verkleinerbar ist, daß er mit der umlaufenden Rille (21) in den im Filterschlauch (14) vorhandenen Ring (17) einführbar ist.

8. Staubfilter nach den Ansprüchen 1 bis 7, dadurch gekennzeichnet, daß der als offenes Rohr ausgebildete Stutzen (19) im Bereich der Überlappung seiner beiden Enden (20) durch Sicherungselemente, wie z.B. Stifte (22), Schrauben oder Nieten, gegen Herausfallen gesichert ist.

9. Staubfilter nach den Ansprüchen 1 bis 8, dadurch gekennzeichnet, daß das Haltenetz (23) aus mit Klammern (25) zusammengesetzten oder mit festen Stegen (26) verbundenen Ringen (24) besteht.

10. Staubfilter nach den Ansprüchen 1 bis 9, dadurch gekennzeichnet, daß die Ringe (24) einen kreisförmigen Querschnitt haben.

## Claims

1. Dust filter having vertically or horizontally arranged filter tubes (14) drawn over supporting elements (15) and secured to a separating plate (11) arranged between a dusty-air and a clean-air space (12, 13) in a filter housing (10), the filter tubes (14) being mountable and demountable from the clean air side and their supporting elements (15) being arranged in the filter tubes (14) without any securing means, characterised in that the filter tubes (14), by means of a connection piece (19) projecting as an extension beyond their base (16), are inserted freely movably in the axial direction of the filter tubes (14) into a holding mesh (23) comprising rings (24) and secured to the filter housing (10), and are inserted in the holding mesh (23) with their movement in the radial direction restricted by the size of the rings (24).

2. Dust filter according to Claim 1, characterised in that a closed ring (17) which comprises a wire circular in cross-section is let in for receiving the connection piece (19) at the lower end of the filter tube (14).

3. Dust filter according to Claim 2, characterised in that the ring (17) is laid in a fold (18) formed by turning the lower end of the filter tube (14) inwards in the axial direction with respect to the open end.

4. Dust filter according to Claims 1 to 3, characterised in that the connection piece (19) comprises a pipe slit along one of its generatrices, whereof the ends (20) overlap one another.

5. Dust filter according to one of Claims 1 to 4, characterised in that the connection piece (19) has a plain lower end and is provided at its upper end with a peripheral, inwardly curved groove (21).

6. Dust filter according to one of Claims 4 and 5, characterised in that the connection piece (19) comprises resilient and low-friction material.

7. Dust filter according to Claims 5 and 6, characterised in that the connection piece (19) is reducible in its diameter by compression by hand, by means of a gripper or another tool to the extent that it can be inserted with its peripheral groove (21) into the ring (17) in the filter tube (14).

8. Dust filter according to Claims 1 to 7, characterised in that the connection piece (19) constructed as an open pipe is secured against disengagement in the region of the overlapping of its two ends (20) by means of securing elements, such as for example pins (22), screws or rivets.

9. Dust filter according to Claims 1 to 8, characterised in that the holding mesh (23) comprises rings (24) joined by clips (25) or connected by fixed connections (26).

10. Dust filter according to Claims 1 to 9, characterised in that the rings (24) have a circular cross-section.

## Revendications

1. Filtre à poussière comportant des manches de filtre (14) enfilées sur des éléments de soutien (15) et fixées sur une plaque de séparation (11) disposée entre le compartiment d'air poussiéreux et le compartiment d'air épuré (12, 13), dans un caisson de filtre (10), lesquelles manches peuvent être montées et démontées du côté de l'air épuré et dont les éléments de soutien (15) sont disposés dans les manches de filtre (14), sans aucun dispositif de fixation, caractérisé en ce que les manches de filtre (14) comportant une tubulure (19) servant de prolongement et faisant saillie par rapport à leur fond (16), sont insérées dans une grille de maintien (23), constituée d'anneaux (24) et fixée sur le caisson de filtre (10), de manière à pouvoir se déplacer librement dans la direction axiale des manches de filtre (14) et à se déplacer radialement de façon limitée par la dimension des anneaux (24) de la grille de maintien (23).

2. Filtre à poussière selon la revendication 1, caractérisé en ce qu'un anneau (17) fermé, constitué d'un fil de section transversale circulaire, est encastré à l'extrémité intérieure de la manche de filtre (14) pour recevoir la tubulure (19).

3. Filtre à poussière selon la revendication 2, caractérisé en ce que l'anneau (17) est posé dans un pli (18), obtenu par pliage de l'extrémité inférieure de la manche de filtre (14), vers l'intérieur et axialement vers l'extrémité ouverte.

4. Filtre à poussière selon les revendications 1 à 3, caractérisé en ce que la tubulure (19) est constituée d'un tube fendu sur l'une de ses génératrices, dont les extrémités (20) se recouvrent l'une contre l'autre.

5. Filtre à poussière selon l'une des revendications 1 à 4, caractérisé en ce que la tubulure (19) est lisse à son extrémité inférieure et pourvue, sur son extrémité supérieure, d'une rainure (21) recourbée vers l'intérieur et continue.

6. Filtre à poussière selon l'une des revendications 4 et 5, caractérisé en ce que la tubulure (19) est réalisée dans un matériau élastique et glissant.

7. Filtre à poussière selon les revendications 5 et 6, caractérisé en ce que le diamètre de la tubulure (19) peut être réduit par compression à la main, avec une tenaille à ruban ou un autre outil, de manière que la tubulure puisse être introduite avec la rainure (21) continue, dans l'anneau (17) de la manche de filtre (14).

8. Filtre à poussière selon les revendications 1 à 7, caractérisé en ce que la tubulure (19), qui se présente sous la forme d'un tube ouvert, est fixée de manière à ne pouvoir ressortir, par des éléments de fixation tels que des chevilles (22), des vis ou des rivets, dans la zone du recouvrement de ses deux extrémités (20).

9. Filtre à poussière selon les revendications 1 à 8, caractérisé en ce que la grille de maintien (23) est constituée d'anneaux (24) assemblés par des agrafes (25), ou reliés par des entretoises (26).

10. Filtre à poussière selon les revendications 1 à 9, caractérisé en ce que les anneaux (24) ont une section transversale circulaire.

Fig.1

Fig.2

Fig.3

Fig.4